# EUROPÄISCHE PATENTSCHRIFT

(11) **EP 3 617 043 B1**
(45) Veröffentlichungstag und Bekanntmachung des Hinweises auf die Patenterteilung: **09.02.2022**
(21) Anmeldenummer: 18192243.6
(22) Anmeldetag: 03.09.2018
(51) Int. Cl.: F16B 5/00, F16B 5/02, F16B 5/04, F16B 11/00, B62D 27/02

(54) **BEFESTIGUNGSEINRICHTUNG**
FIXING DEVICE
DISPOSITIF DE FIXATION

(43) Veröffentlichungstag der Anmeldung: 04.03.2020
(73) Patentinhaber: MAGNA STEYR Fahrzeugtechnik AG & Co KG, 8041 Graz (AT)
(72) Erfinder: MAIER, Stefan, 9473 Lavamünd (AT); TAUCHER, Jürgen, 8261 Sinabelkirchen (AT)
(74) Vertreter: Zangger, Bernd

(56) Entgegenhaltungen:
- EP-A1- 2 236 395
- DE-A1- 10 022 360
- DE-A1- 10 329 017
- JP-Y1- S5 023 717
- US-A1- 2009 102 238

## Beschreibung

### Gebiet der Erfindung

Die vorliegende Erfindung betrifft eine Befestigungseinrichtung zum Befestigen eines ersten Bauteils an einem zweiten Bauteil, insbesondere zum Befestigen zweier Rohbaumodule im Kraftfahrzeugbau. Die Erfindung betrifft auch einen Bauteilverbund umfassend ein erstes Bauteil und ein zweites Bauteil und eine solche Befestigungseinrichtung.

### Stand der Technik

Bei klassischen Karosserien werden durch rohbaufeste Verbindungstechniken, wie zum Beispiel durch Schweißen, oder Kleben und Nieten Hauptmodule der Karosserie wie Vorbau, Zelle und Heckmodul miteinander verbunden. Geschraubte Lösungen, wie sie zum Beispiel zur Befestigung eines Frontendmoduls eingesetzt werden können, werden mit aufwendigen bauteilspezifischen Konsolen als Hilfsmittel ausgeführt.

Der Aufbau von ausreichend festen Verbindungen im Automobil-Rohbau ist daher aufwändig und kostspielig. Der Einsatz von Verbindungsstücken ist bisher auf spezielle Bereiche der Karosserie oder bestimmte Ausformungen der Verbindungsstücke begrenzt.

Beispielsweise offenbart die DE 103 29 017 A1 eine Tragekonstruktion aus miteinander verbundenen Profilteilen, insbesondere für Karosserieaufbauten von Fahrzeugen, mit im Wesentlichen rechteckigen Hohlprofilen, welche an mindestens einem Knotenpunkt formschlüssig über eine nicht-thermische Fügeverbindung verbunden sind, wobei die Fügeverbindung eine flächige Klebeverbindung ist und wobei die Profilteile direkt aneinander anliegen und mindestens an dem Knotenpunkt eine ebene Klebeflächen ausbildende und aufeinander abgestimmte Form aufweisen, über welche die Profilteile direkt oder indirekt derart miteinander verklebbar sind, dass eine teileübergreifende, mechanische Momentenabstützung zwischen den Profilteilen an dem Knotenpunkt durch die Klebeverbindung entsteht.

Die DE 100 22 360 A1 offenbart ein Verbundbauteil aus zwei oder mehreren Profilen, bei dem wenigstens ein Profil mit einem freien Ende an das zweite Profil angrenzt oder in das zweite Profil eintaucht, wobei im Bereich der Anschlussstelle der Profile Verstärkungselemente angebracht sind, die einen Formschluss mit den Profilen bilden, und wobei die Profile durch im Bereich der Anschlussstelle angespritzten oder aufgeschrumpften, thermoplastischen Kunststoff miteinander verbunden sind.

### Zusammenfassung der Erfindung

Es ist eine Aufgabe der Erfindung, eine Befestigungseinrichtung zum Befestigen eines ersten Bauteils an einem zweiten Bauteil anzugeben, die eine ausreichend starke Befestigung ermöglicht, beispielsweise für das Befestigen zweier Rohbaumodule im Kraftfahrzeugbau, dabei aber besonders kostengünstig und effizient hergestellt werden kann. Eine Aufgabe der Erfindung ist auch einen Bauteilverbund anzugeben, umfassend ein erstes Bauteil und ein zweites Bauteil und eine solche kostengünstige, effiziente Befestigungseinrichtung zur Befestigung des ersten Bauteils am zweiten Bauteil.

Die Lösung der Aufgabe erfolgt durch eine Befestigungseinrichtung zum Befestigen eines ersten Bauteils an einem zweiten Bauteil, insbesondere zum Befestigen zweier Rohbaumodule im Kraftfahrzeugbau, mit den Merkmalen des Anspruchs 1.

Die Befestigungseinrichtung umfasst ein erstes und ein zweites Verbindungsstück, wobei das erste und zweite Verbindungsstück jeweils aufweisen: eine Bauteilbefestigungsfläche, eine Verbindungsstückbefestigungsfläche die normal auf die Bauteilbefestigungsfläche steht, und mindestens eine, bevorzugt zwei, seitliche Verstärkungsflächen, die jeweils eine seitliche Endkante der Bauteilbefestigungs-fläche mit einer seitlichen Endkante der Verbindungsstückbefestigungsfläche verbinden, wobei die Bauteilbefestigungsfläche des ersten Verbindungsstückes an dem ersten Bauteil befestigt ist, wobei die Bauteilbefestigungsfläche des zweiten Verbindungsstückes an dem zweiten Bauteil befestigt ist, wobei die Verbindungsstückbefestigungsfläche des ersten Verbindungsstückes an der Verbindungsstückbefestigungsfläche des zweiten Verbindungsstückes befestigt ist. Das erste und zweite Verbindungsstück weisen jeweils eine Fortsatzfläche auf, wobei die Fortsatzfläche im Wesentlichen eine Verlängerung der Verbindungsstückbefestigungsfläche bildet, die sich jenseits der Bauteilbefestigungsfläche des Verbindungsstücks erstreckt, so dass sich in Verwendung der Verbindungstücke die Fortsatzfläche zwischen erstem und zweitem Bauteil befindet.

Erfindungsgemäß werden zwei Adapterkonsolen, nämlich das erste und zweite Verbindungsstück, angegeben, die einen sehr einfachen Aufbau aufweisen und miteinander zusammenwirken um Bauteile miteinander zu befestigen. Die Verbindungsstücke können an verschiedenen Positionen in einem Fahrzeug verwendet werden, insbesondere zum längsseitigen Verbinden zweier Profilteile oder Profilenden von Modulen. Die Verbindungsstücke können wegen ihres einfachen Aufbaus kostensparend als Gleichteile hergestellt werden.

Durch die Erfindung können bei der Herstellung eines Kraftfahrzeuges kleinere vorgefertigte Module später in der Montage zusammengefügt werden und müssen nicht die gesamte Prozesskette durchlaufen, beispielsweise zum Fügen erst nach einem Lackierprozess.

Falls durch eine notwendige Reparatur oder auf Grund eines Kundenwunsches einzelne Module nach der Fahrzeugfertigung getauscht werden müssen, ist das für mittels erfindungsgemäßer Befestigungseinrichtung verbundener Module einfach und kostengünstig möglich.

Die Verbindungsstücke können so eingesetzt werden, dass zunächst eine Verschraubung an den Verbindungsstückbefestigungsflächen in Fahrzeug X-Richtung erfolgt, mit der Möglichkeit eines Toleranzausgleiches in Y und Z Richtung des Fahrzeuges.

Vorzugsweise ist die Bauteilbefestigungsfläche des ersten Verbindungsstückes an dem ersten Bauteil und/oder die Bauteilbefestigungsfläche des zweiten Verbindungsstückes an dem zweiten Bauteil verschraubt und/oder vernietet und/oder verschweißt und/oder verklebt ist. Diese Flächen können auch auf andere bekannte Weisen mechanisch-, thermisch oder chemisch verbunden werden. Besonders bevorzugt aber sind die Flächen verschraubt und somit auch nachträglich lösbar. In einer anderen Ausführungsform sind die Flächen geklebt und geschraubt, beispielsweise FDS geschraubt - also mittels "Flow-Drill Schrauben".

Vorzugsweise ist die Verbindungsstückbefestigungsfläche des ersten Verbindungsstückes an der Verbindungsstückbefestigungsfläche des zweiten Verbindungsstückes verschraubt und/oder vernietet und/oder verschweißt und/oder verklebt. Wie zuvor für die Bauteilbefestigungsflächen beschrieben, können auch die Verbindungsstückbefestigungsflächen auf andere bekannte Weisen mechanisch-, thermisch oder chemisch verbunden werden. Besonders bevorzugt aber sind die Flächen verschraubt oder sind geklebt und geschraubt, beispielsweise FDS geschraubt - also mittels "Flow-Drill Schrauben".

Die Verbindungsstückbefestigungsfläche des ersten Verbindungsstückes an der Verbindungsstückbefestigungsfläche des zweiten Verbindungsstückes ist vorzugsweise so verschraubt, dass ein Kopf einer Schraube an der Verbindungsstückbefestigungsfläche des ersten Verbindungsstückes anliegt und eine Stirnseite einer Mutter an der Verbindungsstückbefestigungsfläche des zweiten Verbindungsstückes anliegt. Die Schraube ist dabei in die Mutter eingeschraubt, so dass die beiden Verbindungsstückbefestigungsflächen zwischen Schraubenkopf und Mutter eingespannt sind. Alternativ oder zusätzlich können auch Flow-Drill Schrauben verwendet werden, die üblicherweise keine Mutter aufweisen.

Die Verstärkungsflächen weisen bevorzugt eine Dreieckform auf. Eine Endkante der Verstärkungsfläche kann sich vom Ende der Endkante der Bauteilbefestigungsfläche zum Ende der Endkante der Verbindungsstückbefestigungsfläche erstrecken.

Die Verstärkungsflächen stehen bevorzugt jeweils normal auf die Bauteilbefestigungsfläche und auf die Verbindungsstückbefestigungsfläche.

Das erste und zweite Verbindungsstück sind vorzugsweise als Gleichteile ausgebildet.

Ein Bauteilverbund kann erfindungsgemäß ein erstes Bauteil und ein zweites Bauteil umfassen, insbesondere ein erstes und zweites Rohbaumodul eines Kraftfahrzeuges, sowie zumindest eine Befestigungseinrichtung wie zuvor beschrieben, wobei die Bauteilbefestigungsfläche des ersten Verbindungsstückes an dem ersten Bauteil befestigt ist, wobei die Bauteilbefestigungsfläche des zweiten Verbindungsstückes an dem zweiten Bauteil befestigt ist, wobei die Verbindungsstückbefestigungsfläche des ersten Verbindungsstückes an der Verbindungsstückbefestigungsfläche des zweiten Verbindungsstückes befestigt ist. Hierdurch sind letztlich das erste Bauteil und das zweiten Bauteil an einander befestigt bzw. miteinander verbunden.

Die Fortsatzfläche befindet sich zwischen erstem und zweitem Bauteil. Insbesondere kann die Fortsatzfläche zwischen einer Stirnseite des ersten Bauteils und einer Stirnseite des zweiten Bauteils geklemmt sein. Mittels der Fortsatzfläche können die beiden Bauteile axial zueinander positioniert sein.

Bevorzugt sind zumindest zwei Befestigungseinrichtungen einander gegenüberliegend angeordnet, so dass die Befestigungsflächen der gegenüberliegenden Verbindungsstücke einander zugewandt sind, wobei das erste und das zweite Bauteil zwischen den Befestigungsflächen der einander gegenüberliegenden Verbindungsstücke angeordnet sind.

Bevorzugt sind zumindest zwei oder auch mehr Befestigungseinrichtungen seitlich nebeneinander angeordnet, insbesondere so, dass seitliche Verstärkungsflächen zweier Verbindungsstücke jeweils aneinander liegen. Es können daher mehrere insbesondere als Gleichteile ausgebildete Verbindungsstücke in Kombination miteinander, nebeneinander gereiht, verwendet werden, um eine besonders starke Verbindung auszubilden.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Bauteilverbunds umfassend jeweils drei erfindungsgemäße Befestigungseinrichtungen an zwei Seiten des Bauteilverbunds.
- Fig. 2: ist eine Ansicht des Bauteilverbunds gemäß Fig. 1 von oben vor der Verbindung der Verbindungsstücke.
- Fig. 3: ist eine Ansicht des Bauteilverbunds gemäß Fig. 1 von oben nach der Verbindung der Verbindungsstücke.
- Fig. 4: ist eine Ansicht des Bauteilverbunds gemäß Fig. 1 von vorne.
- Fig. 5: ist eine Ansicht des Bauteilverbunds gemäß Fig. 1 von der Seite.
- Fig. 6: ist eine Schnittansicht des Bauteilverbunds gemäß Fig. 1 von oben, somit in der Blickrichtung gemäß Fig. 3, entsprechend dem Schnitt B-B der Fig. 5.
- Fig. 7: ist eine Teildarstellung der Befestigungseinrichtung gemäß Ausschnitt A der Fig. 6.

### Detaillierte Beschreibung der Erfindung

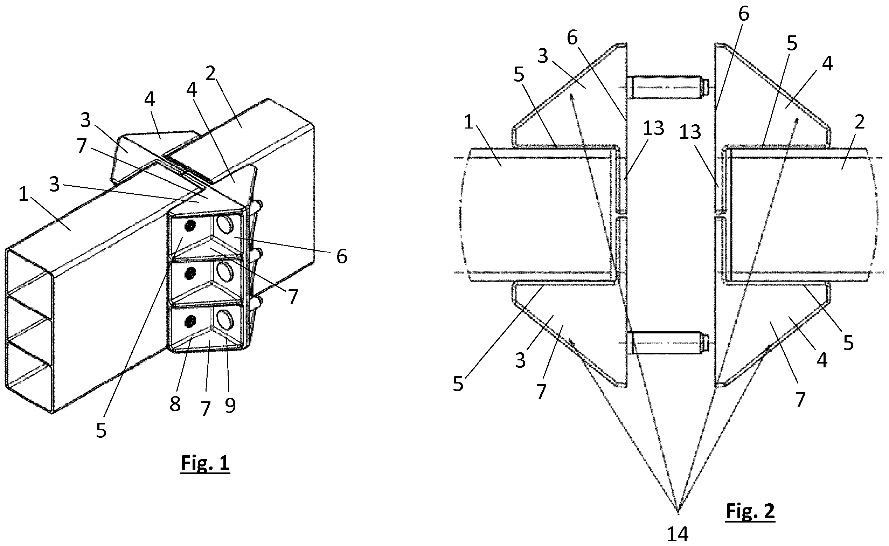

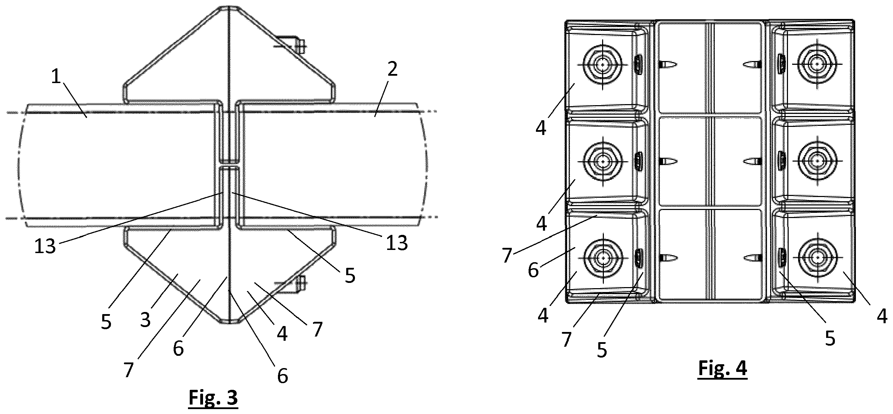

In den Fig. 1-7 ist ein erfindungsgemäßer Bauteilverbund dargestellt, umfassend jeweils drei Befestigungseinrichtungen seitlich nebeneinander, an zwei gegenüberliegenden Seiten des Bauteilverbunds, also insgesamt sechs Befestigungseinrichtungen.

Der Bauteilverbund umfasst ein erstes Bauteil 1, nämlich ein rechteckiges Profil eines Kraftfahrzeugrohbaus, und ein zweites Bauteil 2, nämlich ein gleichgestaltetes, rechteckiges Profil eines weiteren Rohbauteiles. Die beiden Bauteile 1, 2 werden erfindungsgemäß mittels dreieckförmigen Verbindungsstücken 3, 4 aneinander mittelbar befestigt. Dazu sind jeweils zwei Verbindungsstücke, nämlich ein erstes Verbindungsstück 3 und ein zweites Verbindungsstück 4, einerseits mit dem jeweiligen Bauteil und andererseits aneinander befestigt. Derartige zwei Verbindungsstücke 3, 4 bilden zusammen eine Befestigungseinrichtung zum Befestigen des ersten Bauteils 1 an dem zweiten Bauteil 2.

Das erste und zweite Verbindungsstück 3, 4 weisen jeweils auf: eine Bauteilbefestigungsfläche 5, eine Verbindungsstückbefestigungsfläche 6 die normal auf die Bauteilbefestigungsfläche 5 steht und zwei seitliche Verstärkungsflächen 7, die jeweils eine seitliche Endkante 8 der Bauteilbefestigungsfläche 5 mit einer seitlichen Endkante 9 der Verbindungsstückbefestigungsfläche 6 verbinden (siehe insbesondere Fig. 1).

Die Verstärkungsflächen 7 weisen jeweils eine Dreieckform auf und stehen jeweils normal auf die Bauteilbefestigungsfläche 5 und auf die Verbindungsstückbefestigungsfläche 6. Die Verbindungsstücke 3, 4 weisen daher von der Seite betrachtet im Wesentlichen eine Dreieckform auf.

Die Bauteilbefestigungsfläche 5 des ersten Verbindungsstückes 3 ist an dem ersten Bauteil 1 befestigt, die Bauteilbefestigungsfläche 5 des zweiten Verbindungsstückes 4 an dem zweiten Bauteil 2.

Die Verbindungsstückbefestigungsfläche 6 des ersten Verbindungsstückes 3 ist an der Verbindungsstückbefestigungsfläche 6 des zweiten Verbindungsstückes 4 befestigt.

Insbesondere sind die Bauteilbefestigungsflächen 5 mit dem jeweiligen Bauteil 1, 2 verschraubt, bevorzugt mittels Flow-Drill-Schrauben. Bevorzugt sind diese Befestigungsflächen zusätzlich geklebt.

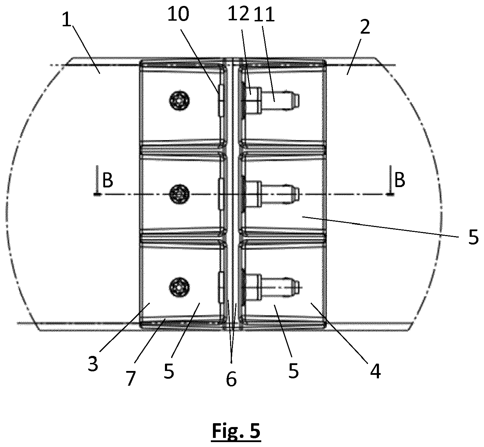

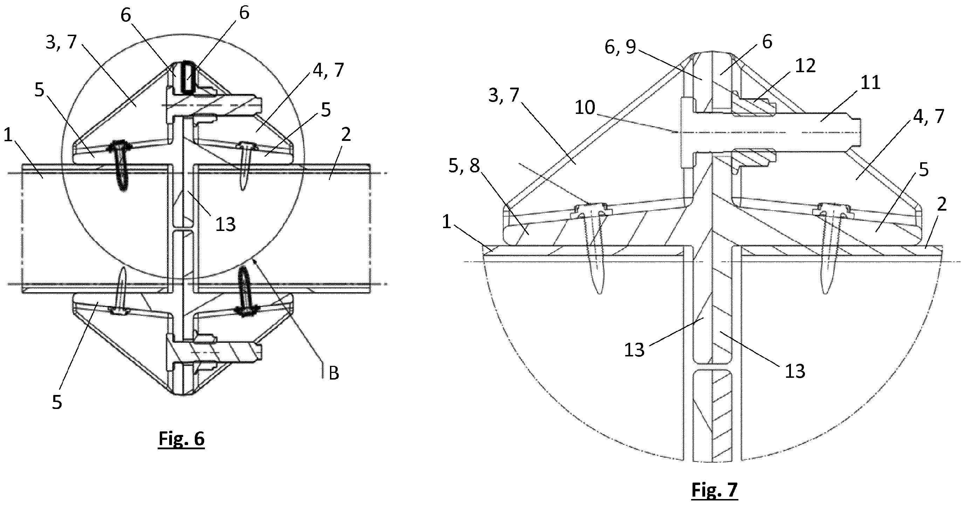

Die Verbindungsstückbefestigungsflächen 6 sind jeweils miteinander verschraubt - siehe insbesondere Fig. 5 und 7. Die Verbindungsstückbefestigungsfläche 6 des ersten Verbindungsstückes 3 ist an der Verbindungsstückbefestigungsfläche 6 des zweiten Verbindungsstückes 4 verschraubt, wobei ein Kopf 10 einer Schraube 11 an der Verbindungsstückbefestigungsfläche 6 des ersten Verbindungsstückes 3 anliegt und eine Stirnseite einer Mutter 12 an der Verbindungsstückbefestigungsfläche 6 des zweiten Verbindungsstückes 4 anliegt. Insbesondere kann eine Einpressschraube als Schraube 11 verwendet werden um zusammen mit einer Mutter 12 eine lösbare Verbindung der Verbindungsstückbefestigungsflächen 6 darzustellen.

Wie in allen Figuren, beispielsweise in Fig. 6 und 7 gut ersichtlich, weisen das erste und das zweite Verbindungsstück 3, 4 zusätzlich zu ihrer Dreiecksform jeweils eine Fortsatzfläche 13 auf, wobei die Fortsatzfläche 13 im Wesentlichen eine Verlängerung der Verbindungsstückbefestigungsfläche 6 bildet, die sich jenseits der Bauteilbefestigungsfläche 5 des Verbindungsstücks 3, 4 erstreckt. Die Fortsatzfläche 13 der Verbindungstücke 3, 4 ist jeweils zwischen erstem und zweitem Bauteil 1, 2 angeordnet, so dass durch die Fortsätze 13 ein stirnseitiger Anschlag für die Profile bzw. Bauteile 1, 2 gebildet wird. Die Fortsatzfläche 13 ist jeweils zwischen einer Stirnseite des ersten Bauteils 1 und einer Stirnseite des zweitem Bauteils 2 geklemmt. Die Fortsatzflächen 13 bilden somit auch einen festgelegten Abstand zwischen den Bauteilen 1 und 2 aus.

Wie beispielsweise in Fig. 1 gut ersichtlich, sind einerseits drei Befestigungseinrichtungen seitlich nebeneinander angeordnet, so dass die seitlichen Verstärkungsflächen 7 zweier Verbindungsstücke 3, 4 jeweils aneinander liegen. In der Ausführung gemäß Fig. 1 decken dadurch die Verbindungsstücke 3, 4 die gesamte Höhe der Bauteile 1, 2 ab.

Zusätzlich sind jeweils zwei Befestigungseinrichtungen einander gegenüberliegend angeordnet (siehe zum Beispiel Fig. 1 und 2), so dass die Befestigungsflächen 5 der gegenüberliegenden Verbindungsstücke 3, 4 einander zugewandt sind, wobei das erste und das zweite Bauteil 1, 2 zwischen den Befestigungsflächen 5 der einander gegenüberliegenden Verbindungsstücke 3, 4 angeordnet sind. Über die gesamte Höhe der Profile bzw. Bauteile 1, 2 sind daher jeweils gegenüberliegend Befestigungseinrichtungen bzw. jeweils erste Verbindungsstücke 3 gegenüber ersten Verbindungsstücken 3 sowie zweite Verbindungsstücke 4 gegenüber zweiten Verbindungsstücken 4 angeordnet, so dass die Profile 1, 2 zwischen den jeweiligen Befestigungsflächen 5 der ersten bzw. zweiten Verbindungsstücke befestigt, insbesondere verschraubt, Flow-Drill geschraubt und/oder geklebt, sind.

Alle eingesetzten ersten und zweiten Verbindungsstücke 3, 4 sind als Gleichteile 14 ausgebildet (siehe Fig. 2) und können daher besonders kostengünstig und effizient hergestellt werden.

### Bezugszeichenliste

- 1: erstes Bauteil
- 2: zweites Bauteil
- 3: erstes Verbindungsstück
- 4: zweites Verbindungsstück
- 5: Bauteilbefestigungsfläche
- 6: Verbindungsstückbefestigungsfläche
- 7: Verstärkungsfläche
- 8: Endkante der Bauteilbefestigungsfläche
- 9: Endkante der Verbindungsstückbefestigungsfläche
- 10: Kopf
- 11: Schraube
- 12: Mutter
- 13: Fortsatzfläche
- 14: Gleichteile

## Patentansprüche

1. Befestigungseinrichtung zum Befestigen eines ersten Bauteils (1) an einem zweiten Bauteil (2), insbesondere zum Befestigen zweier Rohbaumodule im Kraftfahrzeugbau, umfassend ein erstes Verbindungsstück (3) und ein zweites Verbindungsstück (4), wobei das erste und zweite Verbindungsstück (3, 4) jeweils aufweisen: eine Bauteilbefestigungsfläche (5), eine Verbindungsstückbefestigungsfläche (6) die normal auf die Bauteilbefestigungsfläche (5) steht, und mindestens eine, bevorzugt zwei, seitliche Verstärkungsflächen (7), die jeweils eine seitliche Endkante (8) der Bauteilbefestigungsfläche (5) mit einer seitlichen Endkante (9) der Verbindungsstückbefestigungsfläche (6) verbinden, wobei die Bauteilbefestigungsfläche (5) des ersten Verbindungsstückes (3) an dem ersten Bauteil (1) befestigt ist, wobei die Bauteilbefestigungsfläche (5) des zweiten Verbindungsstückes (4) an dem zweiten Bauteil (2) befestigt ist, wobei die Verbindungsstückbefestigungsfläche (6) des ersten Verbindungsstückes (3) an der Verbindungsstückbefestigungsfläche (6) des zweiten Verbindungsstückes (4) befestigt ist, **dadurch gekennzeichnet , dass** das erste und zweite Verbindungsstück (3, 4) jeweils eine Fortsatzfläche (13) aufweisen, wobei die Fortsatzfläche (13) im Wesentlichen eine Verlängerung der Verbindungsstückbefestigungsfläche (6) bildet, die sich jenseits der Bauteilbefestigungsfläche (5) des Verbindungsstücks (3, 4) erstreckt, so dass sich in Verwendung der Verbindungstücke (3, 4) die Fortsatzfläche (13) zwischen erstem und zweitem Bauteil (1, 2) befindet.

2. Befestigungseinrichtung nach Anspruch 1,
**dadurch gekennzeichnet , dass** die Bauteilbefestigungsfläche (5) des ersten Verbindungsstückes (3) an dem ersten Bauteil (1) und/oder die Bauteilbefestigungsfläche (5) des zweiten Verbindungsstückes (4) an dem zweiten Bauteil (2) verschraubt und/oder vernietet und/oder verschweißt und/oder verklebt ist.

3. Befestigungseinrichtung nach zumindest einem der vorhergehenden Ansprüche,
**dadurch gekennzeichnet , dass** die Verbindungsstückbefestigungsfläche (6) des ersten Verbindungsstückes (3) an der Verbindungsstückbefestigungsfläche (6) des zweiten Verbindungsstückes (4) verschraubt und/oder vernietet und/oder verschweißt und/oder verklebt ist.

4. Befestigungseinrichtung nach Anspruch 3,
**dadurch gekennzeichnet , dass** die Verbindungsstückbefestigungsfläche (6) des ersten Verbindungsstückes (3) an der Verbindungsstückbefestigungsfläche (6) des zweiten Verbindungsstückes (4) verschraubt ist, wobei ein Kopf (10) einer Schraube (11) an der Verbindungsstückbefestigungsfläche (6) des ersten Verbindungsstückes (3) anliegt und eine Stirnseite einer Mutter (12) an der Verbindungsstückbefestigungsfläche (6) des zweiten Verbindungsstückes (4) anliegt.

5. Befestigungseinrichtung nach zumindest einem der vorhergehenden Ansprüche,
**dadurch gekennzeichnet , dass** die Verstärkungsflächen (7) jeweils eine Dreieckform aufweisen und/oder dass die Verstärkungsflächen (7) jeweils normal auf die Bauteilbefestigungsfläche (5) und auf die Verbindungsstückbefestigungsfläche (6) stehen.

6. Befestigungseinrichtung nach zumindest einem der vorhergehenden Ansprüche,
**dadurch gekennzeichnet , dass** das erste und zweite Verbindungsstück Gleichteile (14) sind.

7. Bauteilverbund umfassend ein erstes Bauteil (1) und ein zweites Bauteil (2), insbesondere ein erstes und zweites Rohbaumodul eines Kraftfahrzeuges, sowie zumindest eine Befestigungseinrichtung nach zumindest einem der vorhergehenden Ansprüche,
**dadurch gekennzeichnet , dass** die Bauteilbefestigungsfläche (5) des ersten Verbindungsstückes (3) an dem ersten Bauteil (1) befestigt ist, wobei die Bauteilbefestigungsfläche (5) des zweiten Verbindungsstückes (4) an dem zweiten Bauteil (2) befestigt ist, wobei die Verbindungsstückbefestigungsfläche (6) des ersten Verbindungsstückes (3) an der Verbindungsstückbefestigungsfläche (6) des zweiten Verbindungsstückes (4) befestigt ist, wobei sich die Fortsatzfläche (13) zwischen erstem und zweitem Bauteil (1, 2) befindet, insbesondere die Fortsatzfläche (13) zwischen einer Stirnseite des ersten Bauteils (1) und einer Stirnseite des zweiten Bauteils (2) geklemmt ist.

8. Bauteilverbund nach Anspruch 7,
**dadurch gekennzeichnet , dass** zumindest zwei Befestigungseinrichtungen einander gegenüberliegend angeordnet sind, so dass die Befestigungsflächen (5) der gegenüberliegenden Verbindungsstücke (3, 4) einander zugewandt sind, wobei das erste und das zweite Bauteil (1, 2) zwischen den Befestigungsflächen (5) der einander gegenüberliegenden Verbindungsstücke (3, 4) angeordnet sind.

9. Bauteilverbund nach Anspruch 7 oder 8,
**dadurch gekennzeichnet , dass** zumindest zwei Befestigungseinrichtungen seitlich nebeneinander angeordnet sind, insbesondere so, dass seitliche Verstärkungsflächen (7) zweier Verbindungsstücke (3, 4) aneinander liegen.

## Claims

1. Fastening device for fastening a first component (1) to a second component (2), in particular for fastening two body shell modules in motor vehicle manufacture, comprising a first connection (3) and a second connection piece (4), wherein the first and the second connection piece (3, 4) each comprise: a component fastening surface (5), a connection piece fastening surface (6) which is perpendicular to the component fastening surface (5) and at least one, preferably two, lateral reinforcing surfaces (7) which each connect a lateral end edge (8) of the component fastening surface (5) to a lateral end edge (9) of the connection piece fastening surface (6), wherein the component fastening surface (5) of the first connection piece (3) is fastened to the first component (1), wherein the component fastening surface (5) of the second connection piece (4) is fastened to the second component (2), wherein the connection piece fastening surface (6) of the first connection piece (3) is fastened to the connection piece fastening surface (6) of the second connection piece (4) **characterized in that** the first and the second connection piece (3, 4) each have an extension surface (13), wherein the extension surface (13) essentially forms a prolongation of the connection piece fastening surface (6) which extends beyond the component fastening surface (5) of the connection piece (3, 4), so that when the connection pieces (3, 4) are used, the extension surface (13) is located between the first and the second component (1, 2).

2. Fastening device according to Claim 1,
**characterized in that** the component fastening surface (5) of the first connection piece (3) is screwed and/or riveted and/or welded and/or adhered to the first component (1) and/or the component fastening surface (5) of the second connection piece (4) to the second component (2).

3. Fastening device according to at least one of the preceding claims, **characterized in that** the connection piece fastening surface (6) of the first connection piece (3) is screwed and / or riveted and / or welded and / or adhered to the connection piece fastening surface (6) of the second connection piece (4).

4. Fastening device according to Claim 3,
**characterized in that** the connection piece fastening surface (6) of the first connection piece (3) is screwed to the connection piece fastening surface (6) of the second connection piece (4), wherein a head (10) of a screw (11) is adjacent to the connection piece fastening surface (6) of the first connection piece (3) and an end face of a nut (12) to the connection piece fastening surface (6) of the second connection piece (4).

5. Fastening device according to at least one of the preceding claims, **characterized in that** the reinforcing surfaces (7) are each triangular in shape and/or that the reinforcing surfaces (7) are each perpendicular to the component fastening surface (5) and to the connection piece fastening surface (6).

6. Fastening device according to at least one of the preceding claims, **characterized in that** the first and the second connection piece are common parts (14).

7. Component assembly comprising a first component (1) and a second component (2), in particular a first and second body shell module of a motor vehicle, and also at least one fastening device according to at least one of the preceding claims,
**characterized in that** the component fastening surface (5) of the first connection piece (3) is fastened to the first component (1), wherein the component fastening surface (5) of the second connection piece (4) is fastened to the second component (2), wherein the connection piece fastening surface (6) of the first connection piece (3) is fastened to the connection piece fastening surface (6) of the second connection piece (4) wherein the extension surface (13) is located between the first and second component (1, 2), in particular the extension surface (13) is clamped between an end face of the first component (1) and an end face of the second component (2).

8. Component assembly according to Claim7 ,
**characterized in that** at least two fastening devices are arranged opposite one another, so that the fastening surfaces (5) of the opposite connection pieces (3, 4) are facing one another, wherein the first and the second component (1, 2) are arranged between the fastening surfaces (5) of the connection pieces (3, 4) lying opposite one another.

9. Component assembly according to Claim 7 or8 ,
**characterized in that** at least two fastening devices are arranged side by side, in particular such that lateral reinforcing surfaces (7) of two connection pieces (3, 4) are adjacent to one another.

## Revendications

1. Dispositif de fixation servant à la fixation d'un premier composant (1) à un deuxième composant (2), en particulier servant à la fixation de deux modules de carrosserie brute dans la fabrication automobile, comportant une première pièce de connexion (3) et une deuxième pièce de connexion (4), la première et la deuxième pièce de connexion (3, 4) comprenant respectivement : une surface de fixation de composant (5), une surface de fixation de pièce de connexion (6) qui est normale à la surface de fixation de composant (5), et au moins une, de préférence deux, surfaces de renforcement (7) latérales, qui connectent respectivement une arête d'extrémité (8) latérale de la surface de fixation de composant (5) à une arête d'extrémité (9) latérale de la surface de fixation de pièce de connexion (6), la surface de fixation de composant (5) de la première pièce de connexion (3) étant fixée au premier composant (1), la surface de fixation de composant (5) de la deuxième pièce de connexion (4) étant fixée au deuxième composant (2), la surface de fixation de pièce de connexion (6) de la première pièce de connexion (3) étant fixée à la surface de fixation de pièce de connexion (6) de la deuxième pièce connexion (4), **caractérisé en ce que** la première et la deuxième pièce de connexion (3, 4) comprennent respectivement une surface formant saillie (13), la surface formant saillie (13) formant sensiblement un prolongement de la surface de fixation de pièce de connexion (6) qui s'étend au-delà de la surface de fixation de composant (5) de la pièce de connexion (3, 4), de sorte que la surface formant saillie (13) se trouve entre le premier et le deuxième composant (1, 2) lors de l'utilisation des pièces de connexion (3, 4).

2. Dispositif de fixation selon la revendication 1,
**caractérisé en ce que** la surface de fixation de composant (5) de la première pièce de connexion (3) est vissée et/ou rivetée et/ou soudée et/ou collée sur le premier composant (1) et/ou la surface de fixation de composant (5) de la deuxième pièce de connexion (4) est vissée et/ou rivetée et/ou soudée et/ou collée sur le deuxième composant (2).

3. Dispositif de fixation selon au moins l'une des revendications précédentes, **caractérisé en ce que** la surface de fixation de pièce de connexion (6) de la première pièce de connexion (3) est vissée et/ou rivetée et/ou soudée et/ou collée sur la surface de fixation de pièce de connexion (6) de la deuxième pièce de connexion (4).

4. Dispositif de fixation selon la revendication 3,
**caractérisé en ce que** la surface de fixation de pièce de connexion (6) de la première pièce de connexion (3) est vissée sur la surface de fixation de pièce de connexion (6) de la deuxième pièce de connexion (4), une tête (10) d'une vis (11) s'appuyant contre la surface de fixation de pièce de connexion (6) de la première pièce de connexion (3) et un côté frontal d'un écrou (12) s'appuyant contre la surface de fixation de pièce de connexion (6) de la deuxième pièce de connexion (4).

5. Dispositif de fixation selon au moins l'une des revendications précédentes, **caractérisé en ce que** les surfaces de renforcement (7) présentent respectivement une forme triangulaire et/ou **en ce que** les surfaces de renforcement (7) sont respectivement normales à la surface de fixation de composant (5) et à la surface de fixation de pièce de connexion (6).

6. Dispositif de fixation selon au moins l'une des revendications précédentes, **caractérisé en ce que** la première et la deuxième pièce de connexion sont des parties identiques (14).

7. Ensemble de composants comportant un premier composant (1) et un deuxième composant (2), en particulier un premier et un deuxième module de carrosserie brute d'un véhicule automobile, ainsi qu'au moins un dispositif de fixation selon au moins l'une des revendications précédentes,
**caractérisé en ce que** la surface de fixation de composant (5) de la première pièce de connexion (3) est fixée au premier composant (1), la surface de fixation de composant (5) de la deuxième pièce de connexion (4) étant fixée au deuxième composant (2), la surface de fixation de pièce de connexion (6) de la première pièce de connexion (3) étant fixée à la surface de fixation de pièce de connexion (6) de la deuxième pièce de connexion (4), la surface formant saillie (13) se trouvant entre le premier et le deuxième composant (1, 2), en particulier la surface formant saillie (13) étant serrée entre un côté frontal du premier composant (1) et un côté frontal du deuxième composant (2).

8. Ensemble de composants selon la revendication 7,
**caractérisé en ce qu'**au moins deux dispositifs de fixation sont disposés en regard les uns des autres, de sorte que les surfaces de fixation (5) des pièces de connexion (3, 4) en regard les unes des autres soient tournées les unes des autres, le premier et le deuxième composant (1, 2) étant disposés entre les surfaces de fixation (5) des pièces de connexion (3, 4) en regard les unes des autres.

9. Ensemble de composants selon la revendication 7 ou 8,
**caractérisé en ce qu'**au moins deux dispositifs de fixation sont disposés latéralement les uns à côté des autres, en particulier de telle sorte que des surfaces de renforcement (7) latérales de deux pièces de connexion (3, 4) s'appuient l'une contre l'autre.
